# EUROPEAN PATENT APPLICATION

(11) **EP 4 756 953 A1**
(43) Date of publication of application: **10.06.2026**
(21) Application number: 25794826.5
(22) Date of filing: 20.01.2025
(51) Int. Cl.: H01M 10/04, H01M 50/30

(54) **DEGASSING PROCESS APPARATUS AND OPERATION METHOD THEREOF**

(30) Priority: 25.04.2024 KR 20240055601
(71) Applicant: LG Energy Solution, Ltd., Seoul 07335 (KR)
(72) Inventor: KIM, Sang Jih, Daejeon 34122 (KR); SEO, Yong Soo, Daejeon 34122 (KR); PARK, Jae Hyeong, Daejeon 34122 (KR); HYUN, Je Min, Daejeon 34122 (KR); YOON, Jong Min, Daejeon 34122 (KR); CHO, Ho Kyun, Daejeon 34122 (KR); KIM, Jae Man, Daejeon 34122 (KR); LEE, Eun Hee, Daejeon 34122 (KR); MIN, Se Gi, Daejeon 34122 (KR); KIM, Seong Yong, Daejeon 34122 (KR)
(74) Representative: Goddar, Heinz J.
(86) International application number: PCT/KR2025/001057
(87) International publication number: WO 2025/225827

(57) **Abstract**

A degassing process device according to an embodiment disclosed in this document may include an information acquisition unit that acquires an atmospheric pressure, and a controller that corrects a vacuum pressure during a degassing process of a battery based on the atmospheric pressure, and the vacuum pressure may be a pressure until a vacuum state is reached during the degassing process.

## Description

### TECHNICAL FIELD

### Cross-reference to Related Applications

This application claims priority from Korean Patent Application No. 10-2024-0055601, filed on April 25, 2024, the disclosures of which are incorporated by reference herein.

### Technical Field

Embodiments disclosed in this document relate to a degassing process device and an operating method thereof.

### BACKGROUND ART

Recently, research and development on secondary batteries have been actively conducted. Here, secondary batteries are batteries that can be charged and discharged, and include both conventional Ni/Cd batteries, Ni/MH batteries, and recent lithium ion batteries. Among secondary batteries, lithium ion batteries have the advantage of having much higher energy density than conventional Ni/Cd batteries, Ni/MH batteries, etc. In addition, lithium ion batteries may be manufactured to be small and lightweight, and thus the lithium ion batteries are used as a power source for mobile devices. Recently, the scope of use of the lithium ion batteries has expanded to include a power source for electric vehicles, and the lithium ion batteries are attracting attention as a next-generation energy storage medium.

In a degassing process for removing gas generated during charging and discharging during an activation process of a battery, a vacuum arrival time changes depending on atmospheric pressure. When the vacuum arrival time exceeds an allowable range, a problem may occur in the degassing process in which an alarm is generated unnecessarily and the process becomes impossible to proceed with. Therefore, a method is needed to solve the problem of the vacuum arrival time that changes depending on atmospheric pressure.

### DISCLOSURE OF THE INVENTION

### TECHNICAL PROBLEM

An objective of the embodiments disclosed in this document is to provide a degassing process device that can solve the problem in which the time of the degassing process changes depending on atmospheric pressure and an operating method thereof.

The technical problems of the embodiments disclosed in this document are not limited to the technical problems mentioned above, and other technical problems that are not mentioned can be clearly understood by those skilled in the art from the descriptions below.

### TECHNICAL SOLUTION

A degassing process device according to an embodiment disclosed in this document may include an information acquisition unit that acquires an atmospheric pressure, and a controller that corrects a vacuum pressure during a degassing process of a battery based on the atmospheric pressure, and the vacuum pressure may be a pressure until a vacuum state is reached during the degassing process.

In an embodiment, the controller may calculate a correction pressure based on the atmospheric pressure and a reference atmospheric pressure, and correct the vacuum pressure based on the correction pressure.

In an embodiment, the controller may calculate an input pressure for reaching a target pressure from the reference atmospheric pressure, calculate the correction pressure as a difference between the reference atmospheric pressure and the atmospheric pressure, and correct the vacuum pressure based on the input pressure and the correction pressure.

In an embodiment, the controller may calculate the vacuum pressure by adding the correction pressure to the input pressure.

In an embodiment, if a difference between the atmospheric pressure and a reference atmospheric pressure increases, a degree to which the vacuum pressure is corrected may increase, and if the difference between the atmospheric pressure and the reference atmospheric pressure decreases, the degree of correction for the vacuum pressure may decrease.

In an embodiment, the controller may perform the degassing process so that a vacuum state is achieved based on the corrected vacuum pressure when the vacuum pressure is corrected.

In an embodiment, the degassing process may be a process of removing gas generated inside the battery.

In an embodiment, the controller may correct the vacuum pressure by reflecting the atmospheric pressure in real time.

An operating method of a degassing process device according to an embodiment disclosed in this document may include an operation of acquiring an atmospheric pressure, and an operation of correcting a vacuum pressure during a degassing process of a battery based on the atmospheric pressure, and the vacuum pressure may be a pressure until a vacuum state is reached during the degassing process.

In an embodiment, the operation of correcting the vacuum pressure during the degassing process of the battery based on the atmospheric pressure may include an operation of calculating a correction pressure based on the atmospheric pressure and a reference atmospheric pressure, and an operation of correcting the vacuum pressure based on the correction pressure.

In an embodiment, the operation of calculating the correction pressure based on the atmospheric pressure and the reference atmospheric pressure may include an operation of calculating an input pressure for reaching a target pressure from the reference atmospheric pressure and an operation of calculating the correction pressure as a difference between the reference atmospheric pressure and the atmospheric pressure.

In an embodiment, in the operation of correcting the vacuum pressure based on the correction pressure, the vacuum pressure may be corrected based on the input pressure and the correction pressure.

In an embodiment, if a difference between the atmospheric pressure and a reference atmospheric pressure increases, a degree to which the vacuum pressure is corrected may increase, and if the difference between the atmospheric pressure and the reference atmospheric pressure decreases, the degree to which the vacuum pressure is corrected may decrease.

In an embodiment, the operating method may further include an operation of performing the degassing process to achieve a vacuum state based on the corrected vacuum pressure when the vacuum pressure is corrected.

In an embodiment, the degassing process may be a process of removing gas generated inside the battery.

### ADVANTAGEOUS EFFECTS

The degassing process device and operating method thereof according to an embodiment disclosed in this document can manage the change in vacuum arrival time depending on the atmospheric pressure in the degassing process of the battery.

The degassing process device and operating method thereof according to an embodiment disclosed in this document can correct the vacuum pressure during the degassing process based on the atmospheric pressure.

The degassing process device and operating method thereof according to an embodiment disclosed in this document can manage so that problems of exceeding the allowable range of the vacuum arrival time do not occur even when the atmospheric pressure changes in real time.

In addition, various effects that are directly or indirectly identified through this document can be provided.

### BRIEF DESCRIPTION OF THE DRAWINGS

FIG. 1 is a block diagram illustrating a degassing process device according to an embodiment disclosed in this document.
FIG. 2 is a diagram illustrating an example in which a degassing process device corrects a vacuum pressure according to an embodiment disclosed in this document.
FIG. 3 is a flowchart illustrating an operation method of a degassing process device according to an embodiment disclosed in this document.
FIG. 4 and FIG. 5 are flowcharts specifically illustrating an operation method of a degassing process device according to an embodiment disclosed in this document.
FIG. 6 is a block diagram illustrating a hardware configuration of a computing system for performing an operation method of a degassing process device according to an embodiment disclosed in this document.

### MODE FOR CARRYING OUT THE INVENTION

Hereinafter, embodiments disclosed in this document will be described in detail with exemplary drawings. In adding reference numerals to components in each drawing, it should be noted that the same components are given the same reference numerals as much as possible even if they are shown in different drawings. In addition, in describing the embodiments disclosed in this document, when it is determined that detailed descriptions of related known configurations or functions interfere with understanding of the embodiments disclosed in this document, the detailed descriptions thereof will be omitted.

In describing components of the embodiments disclosed in this document, terms such as first, second, A, B, (a), (b), etc. may be used. These terms are only intended to distinguish the components from other components, and the nature, order, or sequence of the components are not limited by the terms. In addition, unless otherwise defined, all terms used herein, including technical or scientific terms, have the same meaning as generally understood by a person having ordinary knowledge in the technical field to which the embodiments disclosed in this document belong. Terms defined in commonly used dictionaries should be interpreted as having a meaning consistent with their meaning in the context of the relevant art, and will not be interpreted in an idealized or overly formal sense, unless expressly defined in this application.

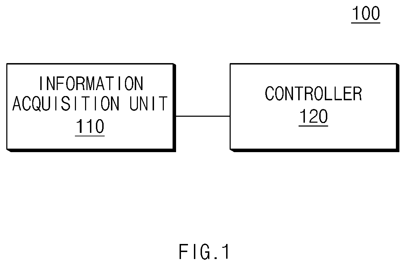

FIG. 1 is a block diagram illustrating a degassing process device according to an embodiment disclosed in this document.

Referring to FIG. 1, a degassing process device 100 according to an embodiment disclosed in this document may include an information acquisition unit 110 and a controller 120.

According to the embodiment, the degassing process device 100 may be a device for performing a degassing process. For example, the degassing process may be a process for removing gas generated inside a battery. For another example, the degassing process may be a process for removing gas generated in a battery after charging/discharging and aging processes are performed during an activation process of the battery.

The information acquisition unit 110 may acquire atmospheric pressure. For example, the information acquisition unit 110 may acquire the atmospheric pressure measured from an external device or may directly measure the atmospheric pressure. For another example, the information acquisition unit 110 may acquire the atmospheric pressure through wired/wireless communication.

According to the embodiment, the information acquisition unit 110 may further acquire a reference atmospheric pressure. For example, the reference atmospheric pressure may be 1 atmospheric pressure, but is not limited thereto, and may include atmospheric pressure that is a reference set by the degassing process device 100 itself. According to an embodiment, the reference atmospheric pressure may include 101.3 Kpa.

The controller 120 may correct a vacuum pressure during the degassing process of the battery based on the atmospheric pressure. For example, the vacuum pressure may include the pressure until a vacuum state is reached during a degassing process. According to an embodiment, the vacuum state may include not only a state in which no air remains, but also a state in which air is reduced below a set range.

The controller 120 may calculate correction pressure based on the atmospheric pressure and the reference atmospheric pressure. For example, a correction pressure may be a pressure for correcting the vacuum pressure. According to an embodiment, the controller 120 may calculate an input pressure for reaching a target pressure from the reference atmospheric pressure, and may calculate the correction pressure as a difference between the reference atmospheric pressure and the atmospheric pressure. According to an embodiment, the controller 120 may calculate an input pressure as -94 Kpa when a reference atmospheric pressure is 101.3 Kpa and a target pressure is 7.3 Kpa. In addition, the controller 120 may calculate the correction pressure as -10 Kpa when the current atmospheric pressure is 111.3 Kpa. For another example, the controller 120 may calculate the correction pressure as 10 Kpa when the current atmospheric pressure is 91.3 Kpa.

The controller 120 may correct the vacuum pressure based on the correction pressure. For example, the controller 120 may correct the vacuum pressure based on the input pressure and correction pressure. For another example, the controller 120 may calculate the vacuum pressure by adding the correction pressure to the input pressure. According to an embodiment, when the input pressure is -94 Kpa and the correction pressure is -10 Kpa due to the current atmospheric pressure being 111.3 Kpa, the controller 120 may correct the vacuum pressure to - 104 Kpa. According to another embodiment, when the input pressure is -94 Kpa and the current atmospheric pressure is 91.3 Kpa due to the correction pressure being 10 Kpa, the controller 120 may correct the vacuum pressure to -80.4 Kpa.

According to the embodiment, when a difference between the current atmospheric pressure and the reference atmospheric pressure increases, the degree to which the vacuum pressure is corrected may increase. For example, since the controller 120 corrects the vacuum pressure based on the difference between the current atmospheric pressure and the reference atmospheric pressure and the input pressure, if the difference between the current atmospheric pressure and the reference atmospheric pressure increases, the degree to which the vacuum pressure is corrected may increase.

According to the embodiment, if the difference between the current atmospheric pressure and the reference atmospheric pressure decreases, the degree to which the vacuum pressure is corrected may decrease. For example, since the controller 120 corrects the vacuum pressure based on the difference between the current atmospheric pressure and the reference atmospheric pressure and the input pressure, if the difference between the current atmospheric pressure and the reference atmospheric pressure decreases, the degree to which the vacuum pressure is corrected may decrease.

According to the embodiment, when the current atmospheric pressure becomes greater than the reference atmospheric pressure, the controller 120 may correct so that an absolute value of the vacuum pressure increases. According to another embodiment, when the current atmospheric pressure becomes less than the reference atmospheric pressure, the controller 120 may correct the absolute value of the vacuum pressure so that it becomes smaller.

When the vacuum pressure is corrected, the controller 120 may perform the degassing process so that the vacuum state is achieved based on the corrected vacuum pressure. For example, the controller 120 may perform the degassing process by controlling the pressure in the chamber to be lowered by the corrected vacuum pressure.

According to the embodiment, the controller 120 may correct the vacuum pressure by reflecting the atmospheric pressure in real time. For example, since the correction of the vacuum pressure may not be accurately reflected when the atmospheric pressure changes rapidly, the controller 120 may correct the vacuum pressure in real time based on the real-time atmospheric pressure to change the vacuum pressure even during the degassing process. That is, the controller 120 may prevent the problem in which the atmospheric pressure changes during the degassing process and the vacuum arrival time exceeds the allowable range.

The degassing process device 100 according to an embodiment disclosed in this document may manage the change in vacuum arrival time depending on the atmospheric pressure during the degassing process of the battery.

The degassing process device 100 according to an embodiment disclosed in this document may correct the vacuum pressure during the degassing process based on the atmospheric pressure.

The degassing process device 100 according to an embodiment disclosed in this document may manage so that the problem of exceeding the allowable range of the vacuum arrival time does not occur even when the atmospheric pressure changes in real time.

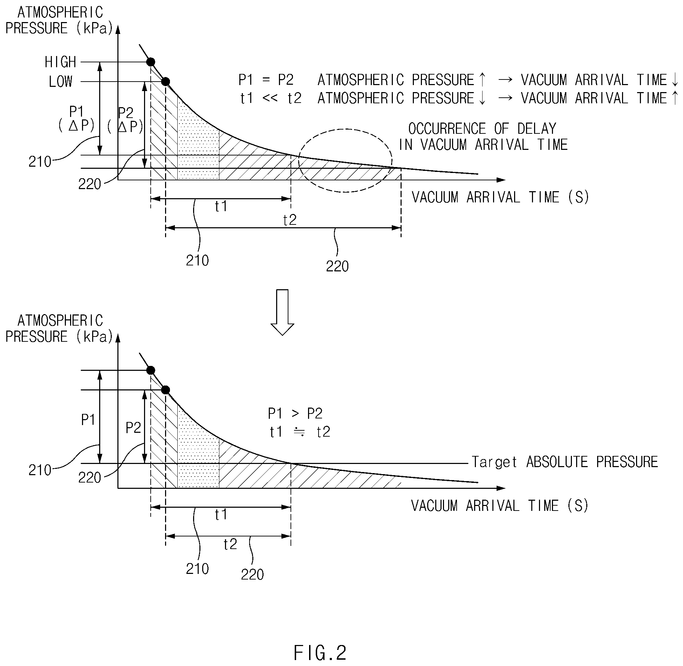

FIG. 2 is a diagram illustrating an example in which a degassing process device corrects vacuum pressure according to an embodiment disclosed in this document.

Referring to FIG. 2, the conventional degas process device sets the input pressure to the same degree in both cases where atmospheric pressure is high and low. That is, the conventional degassing process device reduces the pressure in the chamber to the same degree regardless of the atmospheric pressure. However, since it takes more time to further reduce the pressure as the pressure is lowered, it may take longer to reach a vacuum when the atmospheric pressure is low than the time it takes to reach a vacuum at the reference atmospheric pressure. Therefore, in the conventional degas process device, problems may occur due to a delay in the vacuum arrival time on days when the atmospheric pressure is low.

The degassing process device 100 according to an embodiment disclosed in this document may maintain a target absolute pressure by correcting the vacuum pressure even when a change occurs in the atmospheric pressure. For example, the degassing process device 100 may manage the vacuum arrival time to be similar by correcting the vacuum pressure based on a pressure difference between the current atmospheric pressure and the reference atmospheric pressure to have the same target absolute pressure even if the atmospheric pressure is high or low.

Therefore, the degassing process device 100 according to an embodiment disclosed in this document may prevent the problem of equipment floating due to the vacuum arrival time exceeding the allowable range on days when atmospheric pressure is low.

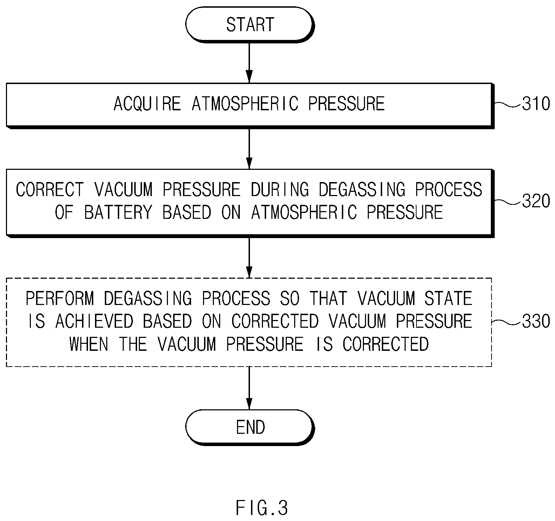

FIG. 3 is a flowchart illustrating an operation method of the degassing process device according to an embodiment disclosed in this document. According to the embodiment, the operations illustrated in FIG. 3 may be performed through the degassing process device 100 of FIG. 1.

According to the embodiment, the degassing process device 100 may be a device for performing a degassing process. For example, the degassing process may be a process for removing gas generated inside a battery. For another example, the degassing process may be a process for removing gas generated in the battery after the charging/discharging and aging processes are performed during the activation process of the battery.

Referring to FIG. 3, in operation 310, the information acquisition unit 110 may acquire atmospheric pressure. For example, the information acquisition unit 110 may acquire the atmospheric pressure measured from an external device or may directly measure the atmospheric pressure. For another example, the information acquisition unit 110 may acquire the atmospheric pressure through wired/wireless communication.

According to the embodiment, the information acquisition unit 110 may further acquire a reference atmospheric pressure. For example, the reference atmospheric pressure may be 1 atmosphere, but is not limited thereto, and may include the atmospheric pressure that is the reference set by the degassing process device 100 itself. According to the embodiment, the reference atmospheric pressure may include 101.3 Kpa.

In operation 320, the controller 120 may correct a vacuum pressure during a degassing process of the battery based on the atmospheric pressure. For example, the vacuum pressure may include the pressure until until a vacuum state is reached during the degassing process. According to the embodiment, the vacuum state may include not only a state in which no air remains, but also a state in which air is reduced below a set range.

In operation 330, when the vacuum pressure is corrected, the controller 120 may perform the degassing process so that the vacuum state is achieved based on the corrected vacuum pressure.

According to the embodiment, the degassing process may be performed by omitting operation 330. That is, operation 330 may be performed through another device outside the degassing process device 100.

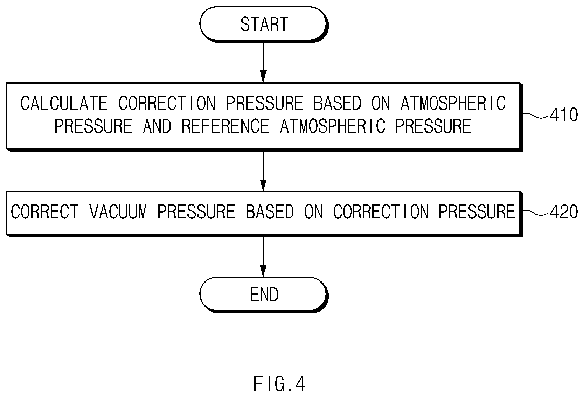

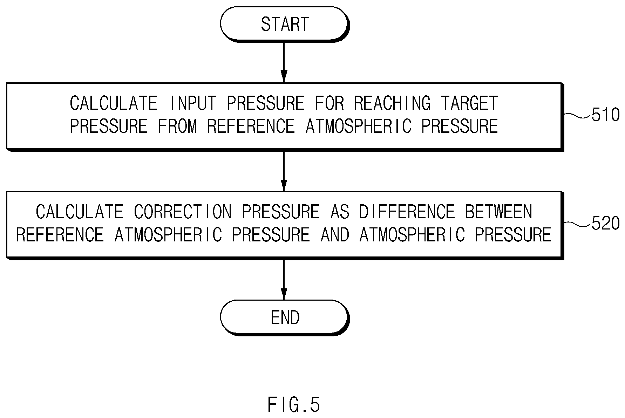

FIGS. 4 and 5 are flowcharts specifically illustrating an operating method of a degassing process device according to an embodiment disclosed in this document. The operations illustrated in FIGS. 4 and 5 may be performed through the degassing process device 100 of FIG. 1.

Referring to FIG. 4, in operation 410, the controller 120 may calculate a correction pressure based on the atmospheric pressure and the reference atmospheric pressure. For example, the correction pressure may be a pressure for correcting the vacuum pressure. According to the embodiment, the controller 120 may calculate an input pressure for reaching a target pressure from the reference atmospheric pressure, and may calculate the correction pressure as the difference between the reference atmospheric pressure and the atmospheric pressure. According to the embodiment, when the reference atmospheric pressure is 101.3 Kpa and the target pressure is 7.3 Kpa, the controller 120 may calculate the input pressure as -94 Kpa. In addition, when the current atmospheric pressure is 111.3 Kpa, the controller 120 may calculate the correction pressure as -10 Kpa. For another example, when the current atmospheric pressure is 91.3 Kpa, the controller 120 may calculate the correction pressure as 10 Kpa.

In operation 420, the controller 120 may correct the vacuum pressure based on the correction pressure. For example, the controller 120 may correct the vacuum pressure based on the input pressure and the correction pressure. For another example, the controller 120 may calculate the vacuum pressure by adding the correction pressure to the input pressure. According to the embodiment, when the input pressure is -94 Kpa and the correction pressure is -10 Kpa due to the current atmospheric pressure being 111.3 Kpa, the controller 120 may correct the vacuum pressure to -104 Kpa. According to another embodiment, when the input pressure is -94 Kpa and the correction pressure is 10 Kpa due to the current atmospheric pressure being 91.3 Kpa, the controller 120 may correct the vacuum pressure to -80.4 Kpa.

According to the embodiment, if the difference between the current atmospheric pressure and the reference atmospheric pressure increases, the degree to which the vacuum pressure is corrected may increase. For example, since the controller 120 corrects the vacuum pressure based on the difference between the current atmospheric pressure and the reference atmospheric pressure and the input pressure, if the difference between the current atmospheric pressure and the reference atmospheric pressure increases, the degree to which the vacuum pressure is corrected may increase.

According to the embodiment, if the difference between the current atmospheric pressure and the reference atmospheric pressure decreases, the degree to which the vacuum pressure is corrected may decrease. For example, since the controller 120 corrects the vacuum pressure based on the difference between the current atmospheric pressure and the reference atmospheric pressure and the input pressure, if the difference between the current atmospheric pressure and the reference atmospheric pressure decreases, the degree to which the vacuum pressure is corrected may decrease.

According to the embodiment, when the current atmospheric pressure becomes greater than the reference atmospheric pressure, the controller 120 may correct so that an absolute value of the vacuum pressure increases. According to another embodiment, when the current atmospheric pressure becomes lower than the reference atmospheric pressure, the controller 120 may correct correct so that the absolute value of the vacuum pressure decreases.

Referring to FIG. 5, in operation 510, the controller 120 may calculate an input pressure for reaching a target pressure from the reference atmospheric pressure. For example, the input pressure may be a difference value between the target pressure and the reference atmospheric pressure.

In operation 520, the controller 120 may calculate a correction pressure as a difference between the reference atmospheric pressure and the atmospheric pressure. For example, the controller 120 may calculate the correction pressure as a value obtained by subtracting the atmospheric pressure from the reference atmospheric pressure. For another example, the controller 120 may also calculate the correction pressure as a value obtained by subtracting the reference atmospheric pressure from the atmospheric pressure.

According to the embodiment, operations 510 and 520 may be performed by being included in operation 410 of FIG. 4.

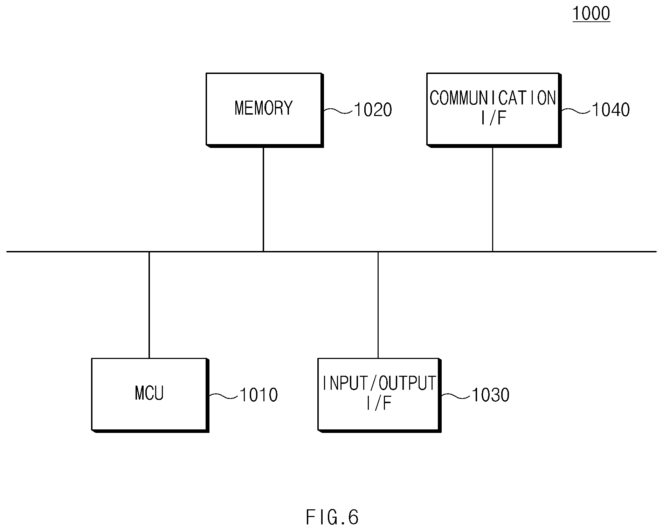

FIG. 6 is a block diagram illustrating a hardware configuration of a computing system for performing an operating method of a degassing process device according to an embodiment disclosed in this document.

Referring to FIG. 6, a computing system 1000 according to an embodiment disclosed in this document may include an MCU 1010, a memory 1020, an input/output I/F 1030, and a communication I/F 1040.

The MCU 1010 may be a processor that executes various programs (e.g., correction pressure calculation programs, vacuum pressure correction programs, atmospheric pressure processing programs, etc.) stored in the memory 1020, processes various information including atmospheric pressure, reference atmospheric pressure, correction pressure, vacuum pressure, input pressure, target pressure, etc. through these programs, and performs functions of a controller included in the degassing process device illustrated in FIG. 1 described above.

The memory 1020 may store various programs such as correction pressure calculation programs, vacuum pressure correction programs, and atmospheric pressure processing programs. In addition, the memory 1020 may store various information including atmospheric pressure, reference atmospheric pressure, correction pressure, vacuum pressure, input pressure, target pressure, etc.

A plurality of such memories 1020 may be provided as needed. The memory 1020 may be a volatile memory or a nonvolatile memory. As the memory 1020 as the volatile memory, RAM, DRAM, SRAM, etc. may be used. As the memory 1020 as the non-volatile memory, ROM, PROM, EAROM, EPROM, EEPROM, flash memory, etc. may be used. The examples of the memories 1020 listed above are only examples and the memories 1020 are not limited to these examples.

As the input/output I/F 1030, there may be provided an interface that connects an input device (not illustrated) such as a keyboard, mouse, or touch panel, an output device such as a display (not illustrated), and the MCU 1010 to allow data to be transmitted and received therebetween.

The communication I/F 1040 may be a configuration that can transmit and receive various data with a server, and may be various devices that can support wired or wireless communication. For example, the degassing process device can transmit and receive various information including atmospheric pressure, reference atmospheric pressure, correction pressure, vacuum pressure, input pressure, target pressure, etc. to and from a separately provided external server through the communication I/F 1040.

In this way, the computer program according to an embodiment disclosed in this document may be implemented as a module that performs each of the functions illustrated in FIG. 1 by being recorded in the memory 1020 and processed by the MCU 1010, for example.

The above description is merely an illustrative description of the technical idea disclosed in this document, and those skilled in the art to which the embodiments disclosed in this document belong may make various modifications and variations without departing from the essential characteristics of the embodiments disclosed in this document.

Therefore, the embodiments disclosed in this document are not intended to limit the technical ideas disclosed in this document, but rather to explain them, and the scope of the technical ideas disclosed in this document is not limited by these embodiments. The scope of protection of the technical ideas disclosed in this document should be interpreted by the claims below, and all technical ideas within the equivalent scope should be interpreted as being included in the scope of rights of this document.

### [Description of reference symbols]

- 100:: degassing process unit
- 110:: information acquisition unit
- 120:: controller
- 1000:: computing system
- 1010:: MCU
- 1020:: memory
- 1030:: input/output I/F
- 1040:: communication I/F

## Claims

1. A degassing process device comprising:
an information acquisition unit that acquires an atmospheric pressure; and
a controller that corrects a vacuum pressure during a degassing process of a battery based on the atmospheric pressure,
wherein the vacuum pressure may be a pressure until a vacuum state is reached during the degassing process.

2. The degassing process device of claim 1, wherein the controller calculates a correction pressure based on the atmospheric pressure and a reference atmospheric pressure, and corrects the vacuum pressure based on the correction pressure.

3. The degassing process device of claim 2, wherein the controller calculates an input pressure for reaching a target pressure from the reference atmospheric pressure,
calculates the correction pressure as a difference between the reference atmospheric pressure and the atmospheric pressure, and
corrects the vacuum pressure based on the input pressure and the correction pressure.

4. The degassing process device of claim 3, wherein the controller calculates the vacuum pressure by adding the correction pressure to the input pressure.

5. The degassing process device of claim 1, wherein, if a difference between the atmospheric pressure and a reference atmospheric pressure increases, a degree to which the vacuum pressure is corrected increases, and
if the difference between the atmospheric pressure and the reference atmospheric pressure decreases, the degree of correction for the vacuum pressure decreases.

6. The degassing process device of claim 1, wherein the controller performs the degassing process so that a vacuum state is achieved based on the corrected vacuum pressure when the vacuum pressure is corrected.

7. The degassing process device of claim 1, wherein the degassing process is a process of removing gas generated inside the battery.

8. The degassing process device of claim 1, wherein the controller corrects the vacuum pressure by reflecting the atmospheric pressure in real time.

9. An operating method of a degassing process device, the method comprising:
an operation of acquiring an atmospheric pressure; and
an operation of correcting a vacuum pressure during a degassing process of a battery based on the atmospheric pressure,
wherein the vacuum pressure is a pressure until a vacuum state is reached during the degassing process.

10. The operating method of claim 9, wherein the operation of correcting the vacuum pressure during the degassing process of the battery based on the atmospheric pressure includes:
an operation of calculating a correction pressure based on the atmospheric pressure and a reference atmospheric pressure; and
an operation of correcting the vacuum pressure based on the correction pressure.

11. The operating method of claim 10, wherein the operation of calculating the correction pressure based on the atmospheric pressure and the reference atmospheric pressure includes:
an operation of calculating an input pressure for reaching a target pressure from the reference atmospheric pressure; and
an operation of calculating the correction pressure as a difference between the reference atmospheric pressure and the atmospheric pressure.

12. The operating method of claim 11, wherein, in the operation of correcting the vacuum pressure based on the correction pressure, the vacuum pressure is corrected based on the input pressure and the correction pressure.

13. The operating method of claim 9, wherein, if a difference between the atmospheric pressure and a reference atmospheric pressure increases, a degree to which the vacuum pressure is corrected increases, and
if the difference between the atmospheric pressure and the reference atmospheric pressure decreases, the degree to which the vacuum pressure is corrected decreases.

14. The operating method of claim 9, further comprising:
an operation of performing the degassing process to achieve a vacuum state based on the corrected vacuum pressure when the vacuum pressure is corrected.

15. The operating method of claim 9, wherein
the degassing process is a process of removing gas generated inside the battery.
